# EUROPEAN PATENT APPLICATION

(11) **EP 3 876 249 A1**
(43) Date of publication of application: **08.09.2021**
(21) Application number: 20161262.9
(22) Date of filing: 05.03.2020
(51) Int. Cl.: H01F 30/02, H01F 30/12, H01F 30/16, H01F 3/12, H01F 3/14, H02M 1/12, H02M 5/00, H02M 7/00

(54) **ZERO-SEQUENCE BLOCKING TRANSFORMER**

(71) Applicant: Hamilton Sundstrand Corporation, Charlotte, NC 28217 (US)
(72) Inventor: KULSANGCHAROEN, Ponggorn, Solihull, West Midlands B90 3ET (GB); MATTOS, Rodrigo Fernández, Solihull, West Midlands B90 4JJ (GB)
(74) Representative: Dehns

(57) **Abstract**

A zero-sequence blocking transformer comprising a first core part around which is wound a first winding and a second core part around which is wound a second winding, and a third core part to create an additional leakage flux path. The concept of this disclosure can be applied to any known core structure by adding an additional leakage flux component part. In the case of a known toroidal core, the additional component part may be a rod of magnetic material fitted into the gap between the two windings to intentionally create an additional leakage flux path. Alternatively, an EE core geometry can be used and the additional leakage flux path is created by forming an air gap or adding a magnetic material insert in the leg which does not carry a winding.

## Description

### TECHNICAL FIELD

The present disclosure concerns designs for zero-sequence blocking transformers (ZSBTs).

### BACKGROUND

Zero-sequence blocking transformers (ZSBTs) are commonly used in multi-phase systems having several converters connected in parallel, such as auto-transformer rectifier units (ATRUs), to eliminate or block zero-sequence components in the output signals due to the parallel windings. Zero-sequence components are components that are at any one time equal in different phases of the system and thus give rise to undesirable harmonic content. ZSBTs are designed to present a high impedance between parallel outputs to block zero-sequence components, to remove triplen (3^{rd}, 6^{th}, 9^{th} etc) order harmonics.

The ZSBT is commonly located in an ATRU between the diode bridge rectifiers and the common DC-link capacitor.

A ZSBT present a leakage inductance which is a function of the leakage flux that does not flow from the primary to the secondary winding of the ZSBT. It is desirable to increase ZSBT leakage inductance as this improves the effect of reducing output current ripple from the diode bridge rectifier as well as improving overall ATRU input current power quality.

In conventional ZSBT designs, the magnetic core geometry and winding scheme are selected to provide a given leakage inductance. Each ZSBT, therefore, will have a set leakage inductance, determined by its core geometry and winding arrangement.

The present inventors have identified a need for a ZSBT design in which the leakage inductance can be controlled independently of the core geometry such that a given core can be easily adapted to have different leakage inductances for different needs.

### SUMMARY

According to the disclosure, there is provided a zero-sequence blocking transformer comprising a first core part around which is wound a first winding and a second core part around which is wound a second winding, and a third core part to create an additional leakage flux path.

The concept of this disclosure can be applied to any known core structure by adding an additional leakage flux component part.

In the case of a known toroidal core, the additional component part may be a rod of magnetic material fitted into the gap between the two windings to intentionally create an additional leakage flux path. Alternatively, an EE core geometry can be used and the additional leakage flux path is created by forming an air gap or adding a magnetic material insert in the leg which does not carry a winding.

### BRIEF DESCRIPTION OF THE DRAWINGS

Fig. 1 is a schematic circuit view of an 18-pulse ATRU with ZSBT.
Fig. 2. shows a 24-pulse ATRU with ZSBT.
Fig. 3 shows a 12-pulse ATRU with ZSBT.
Fig. 4 shows an example of a toroidal core used in a known ZSBT.
Fig. 5 shows an example of a toroidal core modified according to this disclosure.
Fig. 6 shows an example of a toroidal core for a 12-pulse ATRU such as shown in

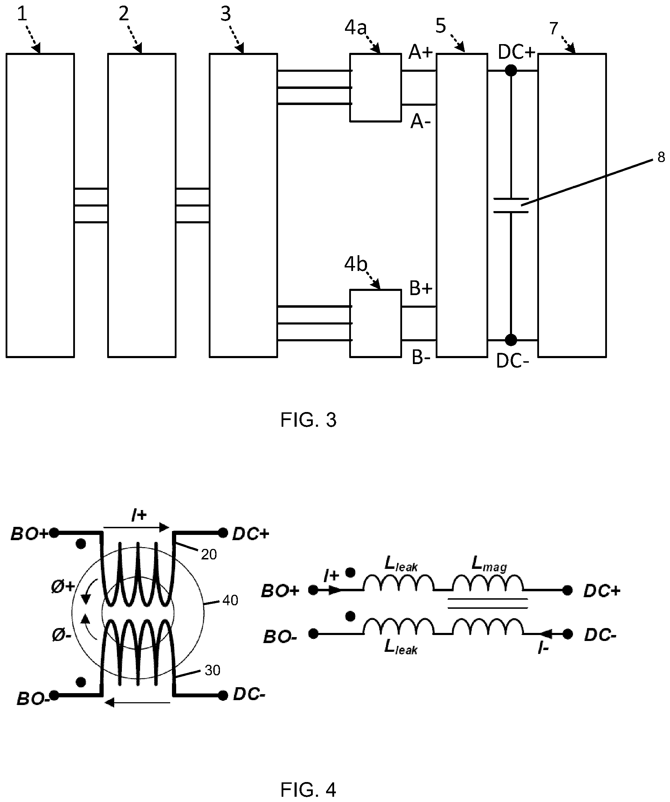

Fig. 3, modified according to this disclosure

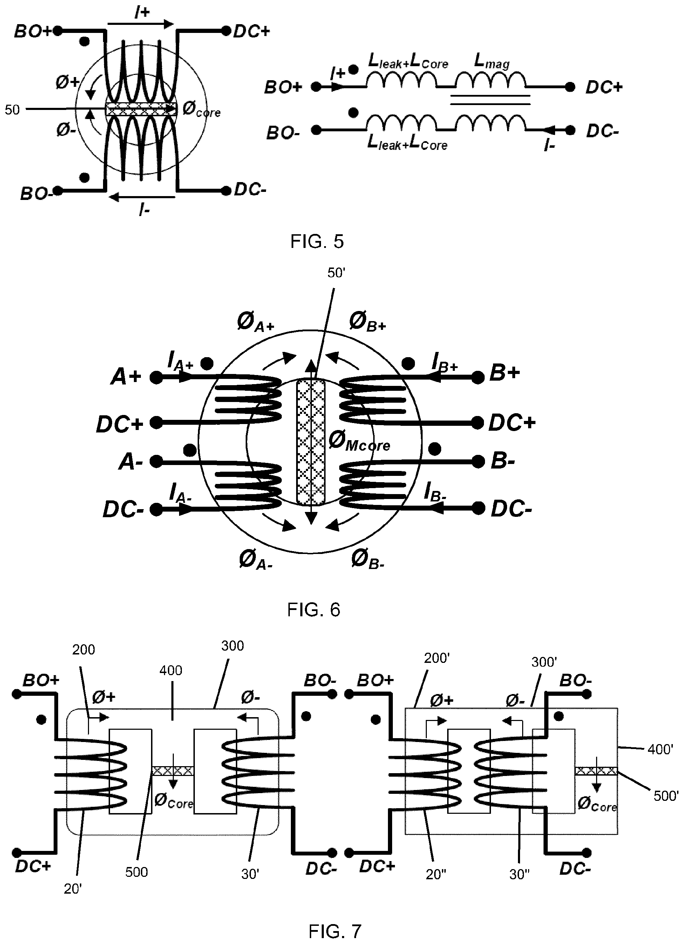

Fig. 7 shows an example of an EE core modified according to this disclosure.

### DETAILED DESCRIPTION

The described embodiments are by way of example only. The scope of this disclosure is limited only by the claims.

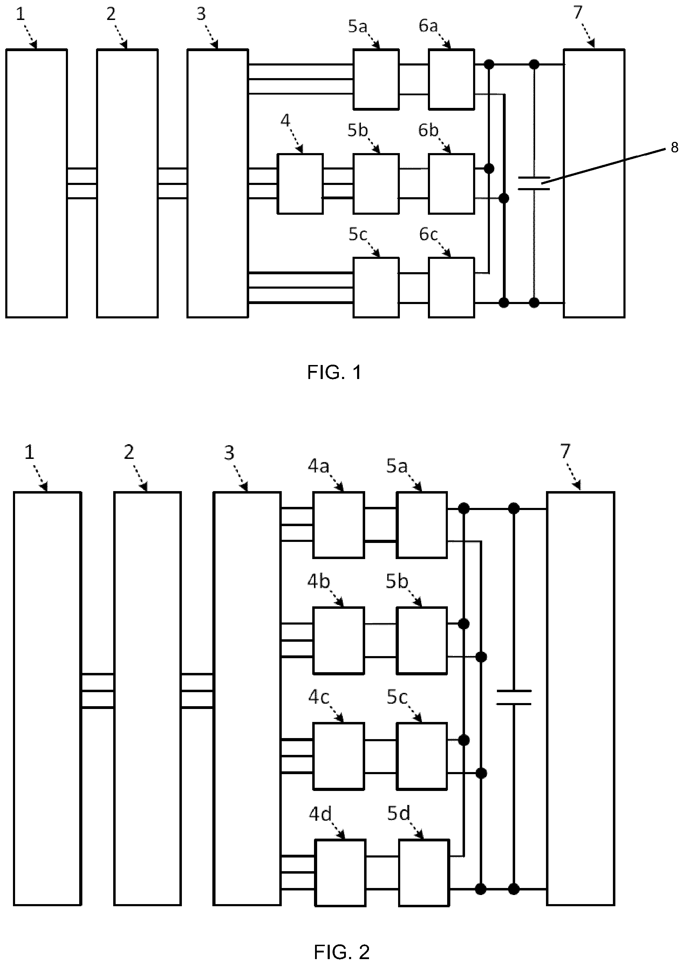

The use of ZSBTs in ATRUs will be described for background, with reference to Figs. 1, 2 and 3.

ATRUs are commonly used in medium to high power AC-DC power conversion systems used in e.g. aerospace applications. Figs. 1 and 2 show examples of 18-pulse and 24-pulse ATRUs. Other winding schemes and topologies are also known.

As described above, to improve performance of the ATRU, ZSBTs are connected between the outputs of the diode bridge rectifiers and the DC-link capacitor.

Fig. 1 shows an 18-pulse ATRU having a three-phase supply 1, an input filter 2, an 18-pulse ATU 3, a balancing resistor 4, three diode bridge rectifiers 5a, 5b and 5c, DC-link capacitor 8, load 7 and ZSBTs 6a, 6b, 6c between the rectifiers and the DC-link capacitor.

Fig. 2 shows a 24-pulse ATRU having a three-phase supply 1, an input filter 2, a 24-pulse ATU 3, four diode bridge rectifiers 4a, 4b, 4c and 4d, DC-link capacitor 8, load 7 and ZSBTs 5a, 5b, 5c, 5d between the rectifiers and the DC-link capacitor.

Fig. 3 shows a 12-pulse ATRU having a three-phase supply 1, an input filter 2, a 12-pulse ATU 3, two diode bridge rectifiers 4a, 4b, DC-link capacitor 8, load 7 and a 12-pulse ZSBT 5 between the rectifiers and the DC-link capacitor.

ZSBTs are usually designed as a toroidal core 40 having two windings 20, 30 as shown in Fig. 4. The main magnetic flux between the two windings 20,30 is usually equal and cancel each other out. ZSBTs have leakage inductances Lₗₑₐₖ and magnetizing inductances L_{mag} as shown in the equivalent circuit in Fig. 4. Only the leakage inductance is important in limiting zero-sequence currents between the outputs of the diode bridges as well as minimizing the output ripple currents.

As mentioned above, in ZSBT designs as shown in Fig. 3, the leakage inductance is determined by the core geometry and cannot be controlled for different requirements.

According to the present disclosure, the ZSBT is designed such that the leakage inductance can be controlled independent of the coil geometry by addition of an extra leakage flux path between the windings. This can be applied to different types of core geometry.

Fig. 5 shows an example of a toroidal core design according to the disclosure. In this design, an insert 50 of magnetic material is added in the space between the first and second windings 20,30. The effect of this is to create an extra leakage flux path which adds an additional leakage inductance L_{core} as seen in the equivalent circuit of Fig. 5. By selecting the size and properties of the magnetic insert 50, the overall leakage inductance of the ZSBT can be adjusted and controlled as required. In case of being unable to find suitable size and properties of the magnetic insert, an air-gap can be put between the magnetic insert and the toroidal core.

In an alternative example, such as shown in Fig. 6, for use in e.g. a 12-pulse system such as shown in Fig. 3, a toroidal core design has two pairs of windings on opposing sides of the toroid. In a manner similar to that explained above for Fig. 5, an insert 50' of magnetic material is provided in the space between the windings, which, again, provide an extra leakage flux path to add more leakage inductance. Again, an air gap could also be incorporated to meet design requirements.

In an alternative example, shown in Fig. 7, the concept is applied to an EE geometry core. Two options are shown in Fig. 7. In the conventional EE transformer a first winding 20' is provided on a first leg 200 and a second winding 30' is provided on a second leg 300 and this geometry would determine the leakage inductance of the ZSBT. In the modification provided according to the present disclosure in the example to the left of Fig. 7, the third (middle) leg 400, which does not have a winding, is formed as an extra leakage flux path by the insertion of an additional leakage flux component 500 which may be an air gap or a magnetic insert or both. The right hand side of Fig. 7 shows an alternative modification of the EE core in which the left leg 200' and the middle leg 300' carry the first and second windings 20", 30" and the extra leakage flux path is formed on the other end leg 400' by the insertion of a leakage flux component 500' which may be an air gap or a magnetic insert.

Other core designs may be adapted similarly by insertion of an additional magnetic component without winding to create an additional leakage flux path.

The core design of this disclosure allows the leakage inductance of ZSBTs to be designed in a controlled manner rather than being dependent on core geometry. Because the leakage inductance is mainly provided by the core part having no winding, the windings can have fewer turns and thus be smaller, resulting in a smaller overall core size which is lighter and uses less winding material.

## Claims

1. A zero-sequence blocking transformer comprising a first core part around which is wound a first winding and a second core part around which is wound a second winding, and a third core part to create an additional leakage flux path.

2. A zero-sequence blocking transformer as claimed in claim 1, where the third core part comprises an additional magnetic component without a winding.

3. A zero-sequence blocking transformer as claimed in claim 1 or 2, wherein the first core part and the second core part combine to form a toroidal core defining a central space and wherein the third core part comprises a rod of magnetic material fitted into the central space between the two windings to create an additional leakage flux path.

4. A zero-sequence blocking transformer as claimed in claim 3, wherein a third winding is wound about the first core part adjacent the first winding and a fourth winding is wound around the second core part adjacent the second winding.

5. A zero-sequence blocking transformer as claimed in claim 3 or 4, wherein the third part also comprises an air gap.

6. A zero-sequence blocking transformer as claimed in claim 1 or 2, wherein the first part and the second part are first and second legs of an EE core geometry and the third core part comprises a third leg of the EE core to which an air gap and/or a magnetic material is inserted.

7. A zero-sequence blocking transformer according to claim 6, wherein the first and second legs are respective outer legs and the third leg is a middle leg between the first and second legs.

8. A zero-sequence blocking transformer according to claim 6, wherein the first and third legs are respective outer legs and the second leg is a middle leg.

9. A zero-sequence blocking transformer as claimed in claim 6, wherein the second and third legs are respective outer legs and the first leg is a middle leg.

10. A multi-phase auto-transformer rectifier unit having a plurality of diode bridge rectifiers connected in parallel and a DC-link capacitor between the rectifiers and a load, and comprising a zero-sequence blocking transformer as claimed in any preceding claim between the rectifiers and the DC-link capacitor.
